Europäisches Patentamt

European Patent Office

Office européen des brevets

(19)

(11) **EP 0 590 925 B1**

(12) **EUROPEAN PATENT SPECIFICATION**

(45) Date of publication and mention
of the grant of the patent:
**14.04.1999 Bulletin 1999/15**

(51) Int Cl.⁶: **G10L 5/06**, G10L 7/08,
G10L 9/06

(21) Application number: **93307664.8**

(22) Date of filing: **28.09.1993**

(54) **Method of speech modelling and a speech recognizer**

Verfahren zur Sprachformung und Gerät zur Spracherkennung

Procédé de modélisation de la parole et dispositif de reconnaissance de la parole

(84) Designated Contracting States:
**DE FR GB**

(30) Priority: **29.09.1992 JP 259301/92**

(43) Date of publication of application:
**06.04.1994 Bulletin 1994/14**

(73) Proprietor: **International Business Machines
Corporation
Armonk, N.Y. 10504 (US)**

(72) Inventors:
• **Nishimura, Masafumi
Yokohama-shi, Kanagawa-ken (JP)**
• **Okochi, Masaaki
Yokohama-shi, Kanagawa-ken (JP)**

(74) Representative: **Moss, Robert Douglas
IBM United Kingdom Limited
Intellectual Property Department
Hursley Park
Winchester Hampshire SO21 2JN (GB)**

(56) References cited:
**EP-A- 0 362 785          EP-A- 0 504 927
GB-A- 2 240 203**

## Description

Field of the invention

This invention relates to speech models using hidden Markov models in subword units, such as phones (or phonemes - i.e. the sound units from which words are made up), and speech recognition using such speech models, and more particularly to enabling efficient speech recognition in response to pronunciational transformation (variations).

Prior art

Speech recognition utilizing the Markov model is intended to perform speech recognition from the viewpoint of probability. Markov modelling describes the time structure of a speech pattern as transitions between states in a Markov chain. Each transition has an associated occurence probability, which is dependent on preceding transitions. The transitions can be observed but the states themselves cannot be directly observed; hence the term 'hidden' Markov model.

Hidden Markov models (HMMs) are described in more detail in "Electronic Speech Recognition", (Ed. Bristow, R.) Collins, 1986, pp137 et sequ., and in "An Introduction to the Applications of the Theory in Probabalistic Functions of a Markov Process to Automatic Speech Recognition", Levinson, S.E. Rabiner, L.R., and Sondhi, M.M., The Bell System Technical Journal, Vol. 62, No. 4, April 1983. Further, EP-0-504-927 and GB-2-240-203 describe such HMM systems. In recent years, there have been systems proposed for large-vocabulary speech recognition and continuous speech recognition based on HMMs in subword units, such as phones (or phonemes) and syllables.

As a representative conventional method, there is a method of speech recognition such that phonetic HMMs are combined in series to represent a word to be recognized. In this method, the choice of such phonetic HMMs to be concatenated is made on the basis of a description (baseform) in a pronunciation dictionary of words to be recognized. However, since subword units in actual speech undergo transformation depending on the types of preceding and subsequent phonemes, pronunciation speed, and accentuation, it is impossible to obtain a high recognition rate if phonetic HMMs are concatenated without regard to such transformations.

Then, there is another method such that phonetic HMMs are prepared for each phonetic environment in consideration of only preceding and subsequent phonetic environments; phonetic HMMs are selected according to a phonetic environment described in a pronunciation dictionary of words to be recognized; and then combined in series. This method is dealt with in detail in "Context-Dependent Modeling for Acoustic-Phonetic Recognition of Continuous Speech" (Proceedings of ICASSP'85, 1985, April, R. Schwartz, Y. Chow, O. Kimball, S. Roucos, M. Krasner, J. Mkhoul). Although this method can easily reflect a speech transformation for each phonetic environment, it requires preparation of a large number of phonetic HMMs to handle various speech transformations because of the extremely large number of possible combinations of phonetic environments which exist, and it requires a large amount of training speech data.

Moreover, for speaker-independent speech recognition, allowing for pronunciational variations which are markedly different from one speaker to another, this method would result in loose models because each single phonetic HMM is required to include all pronunciational fluctuations attributable to each speaker, resulting in a lowered ability to distinguish phonemes.

On the other hand, there is another method such that knowledge about transformations and variations in speech for each word is represented by a combination of subword HMM networks. This method is dealt with in detail in "A Maximum Likelihood Approach to Continuous Speech Recognition" (IEEE Transactions on Pattern Analysis and Machine Intelligence, PAMI-5 (2), pp. 179-190, 1983, L.R. Bahl, F. Jelinek, R.L. Mercer).

However, it is not easy to manually prepare such a network representation for each word, and it is also not necessarily possible to precisely associate knowledge from human senses with individual physical phenomena.

Furthermore, there is another method such that parameters (transition probabilities) on a network are determined and learned for each word. Yet, this method requires a large amount of training speech data to obtain a network representation of each word, so it was not easy to modify words to be recognized in spite of subwords being adopted as units.

SUMMARY OF INVENTION

The present invention provides a speech recognizer, and corresponding method, as claimed in claims 1 and 4.

The present invention preferably provides for each phoneme some representative models as allophonetic HMMs representing transformations (allophones) of each phoneme as a subword. This representation of variations of phonemes is automatically effected on the basis of clustering techniques. Also, speech phenomena such as word pronunciation are represented by speech models where the combination of such allophonetic HMMs is preferably restricted by an N-gram (the occurrence probability of N sets of allophonetic HMMs), and these speech models are used for speech recognition. The invention thus provides a speech recognizer efficiently representing various pronunciational transformations (variations) by a statistical combination (N-gram) of different types of HMMs.

In training a model, a training speech model is composed by connecting a plurality of allophonetic HMMs with each phoneme under the restriction of an N-gram, by reference to the baseform of the training speech, and parameters for an N-gram model among allophonetic HMMs, as well as parameters for each allophonetic HMM, are automatically estimated by applying such techniques as maximum likelihood estimation to improve the speech recognition performance of HMMs.

As an example, think of a word speech model composed under the restriction of a bigram (N = 2; the occurrence probability of a pair). If a pronunciation dictionary element (phonemic transcription) is provided for a particular word, a word speech model is composed by joining HMMs in phonemic units according to the pronunciation dictionary. On this occasion, each phoneme is assigned a plurality of allophonetic HMMs, namely, A (p, i), where p denotes a phoneme and i the type of allophone of phoneme p. These allophonetic HMMs for each phoneme are all processed in parallel, though the combination of statistically unnecessary allophonetic HMMs is restricted by a bigram. That is, if the phonemic series of a word speech model is given as $P = p(1)p(2) ... p(w)$, the occurrence probability of a pair, i.e., $Pr(A(p(j),m)|A(p(j-1),n))$, is evaluated in the form of a product with the likelihood of ordinary HMMs in a transition from an allophonetic HMM model, $A(p(j-1),n)$, for the (j-1)-th phoneme to another allophonetic HMM model, $A(p(j),m)$, for the j-th phoneme.

The term "subword" as referred to in this specification denotes such constituents of speech as a phoneme, syllable, CVC, and VCV (C: consonant; V: vowel), which are not directly associated with pronunciation but refer to phonetic units serving to express different meanings. It may be set at will where to delimit speech to define a subword.

The term "word" as referred to in this specification denotes one unit of an object to be recognized, such as a word, phrase, or sentence, which may be chosen at will.

The term "speech transformation candidate" as referred to in this specification denotes an allophone if the phoneme is defined as a subword, in which case the speech transformation candidates are each subword transformed when the phoneme is pronounced as speech.

There are two types of HMM, i.e., discrete HMMs outputting labels and continuous HMMs outputting feature vectors. This invention allows use of either type of HMM: for continuous HMMs, speech recognition is effected according to a feature vector sequence obtained as a result of an analysis of input speech for its features, whereas for discrete HMMs, speech recognition is effected according to a label sequence obtained as a result of a further conversion of the feature vector sequence.

Description of An Embodiment

An embodiment of this invention will now be described by way of example with reference to the accompanying drawings in which:

Figure 1 is a block diagram of the speech recognizer related to an embodiment of this invention;

Figure 2 is a flowchart of labeling speech;

Figure 3 is a conceptual drawing of a phonemic Markov model;

Figure 4(a) is a table of transition probabilities for phonemic Markov models;

Figure 4(b) is a table of label output probabilities for phonemic Markov models;

Figure 4(c) is a table of occurrence probabilities with a bigram between phonemic Markov models;

Figure 5 is a flowchart of phonemic allophone baseform creation;

Figure 6 is a flowchart of model parameter estimation;

Figure 7 is a flowchart of speech recognition operations.

Figure 8 is a conceptual drawing of a speech model representing words.

In this embodiment, this invention is applied to the speech recognition of words where phonemic Markov models are employed as HMMs for label units and a bigram (N = 2) is used as N-gram.

In phonemic Markov models, because models bearing the same label name are treated as a common model when such models are trained and recognized, it is possible to save storage space and to obtain higher training efficiency. Also, phonemic Markov models enable label sequences obtained from pronunciation to correspond directly to model sequences and thus facilitate creation of initial models for allophonetic HMMs. Such label sequences representing model sequences are called phonemic baseforms in correspondence to the baseforms of phonemic models.

Phonemic Markov models are dealt with in detail in the following article:
"Acoustic Markov Models Used in The Tangora Speech Recognition System " (Proceedings of ICASSP'88, 1988, April, S11-3, L.R. Bahl, P.F. Brown, P.V. de Souza, R.L. Mercer and M.A. Picheny).

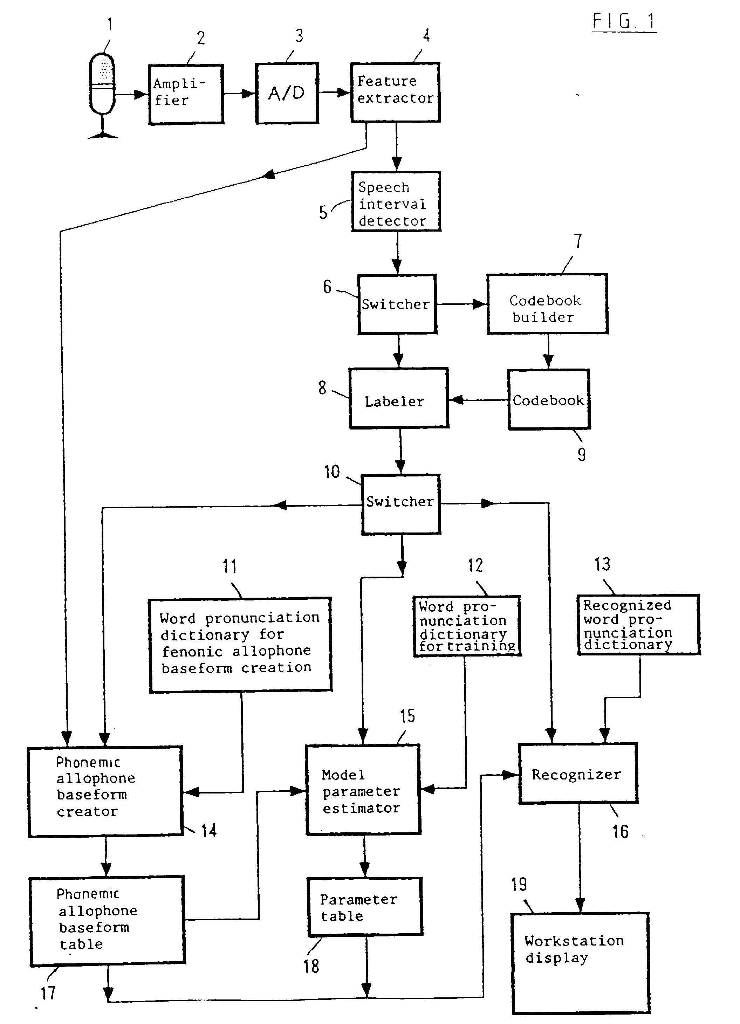

Figure 1 is a complete block diagram of the speech recognizer related to this embodiment. Input speech (words) is fed through a microphone 1 and an amplifier 2 to an analog-to-digital (A/D) convertor 3, whereby the input speech is converted into digital data. The speech data thus digitized is then fed to a feature extractor 4.

In the feature extractor 4, the speech data first undergoes a discrete Fourier transform and is then outputted from a nineteen-channel critical band-pass filter reflecting acoustic characteristics together with a logarithmic power value. This output is sent to an endpoint detector 5 at intervals of about 10 m sec (this unit interval is called a frame), for instance. Then only the feature values of frames judged as falling within a word speech interval are sent to a switcher 6 and then to either a codebook builder 7 or a labeler 8.

During codebook preparation, the switcher 6 is switched to the codebook builder 7, so that the feature data is fed from the feature extractor 4 to the codebook builder 7. The codebook builder 7 then compiles a codebook 9 from the feature volume which is clustered with 128 types of labels.

On the other hand, for speech data recognition, a phonemic allophone baseform is registered, or model parameters are estimated, the switcher 6 is switched to the labeler 8. The labeler 8 assigns a label to each frame referred by the codebook 9.

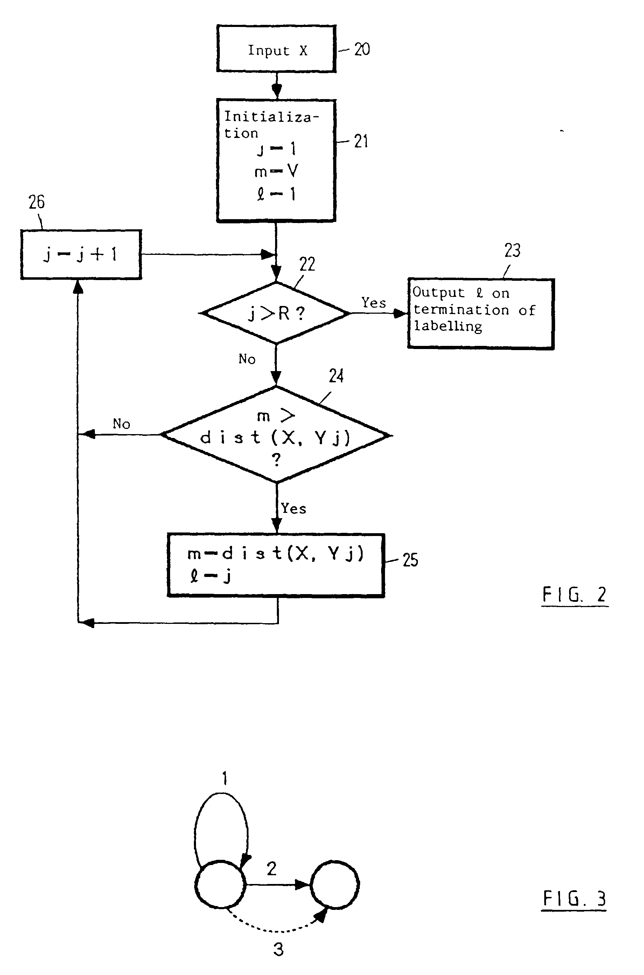

The above-described labeling is effected as shown in Figure 2, where X denotes the volume of feature data of a frame of input speech (words); $Y_j$, the feature volume of the j-th label of the feature volume retained in the codebook; R, the size (= 128) of the codebook; dist (X, $Y_j$), Euclidean distance between X and $Y_j$; m, the minimum value of dist (X, $Y_j$) at each point in time.

First, if a feature volume X is inputted (step 20), then j, m, and 1 (a label number finally assigned to the feature volume X inputted) are initialized to 1, a very large value V, and 1, respectively (step 21).

Second, a judgment is made as to whether all the feature volumes in the codebook have been checked under the condition "j > R" (step 22), and another judgment is made as to whether a label bearing a distance shorter than the distance obtained so far under the condition "m > dist (X, $Y_j$) has been found (step 24).

Third, when a label bearing a shorter distance is found, its label number, j, is set to 1 for the time being (step 25). When no such label is found, the label number, j, remains as it is, and checks are run sequentially through the codebook up to the last label number, R, (step 22) by incrementing j by one to see if there is a label bearing a still shorter distance (step 26). Finally, the label number of the label bearing the shortest distance, that is, the label number of one most like the input feature value, X, among the feature volume labeled in the codebook is outputted as an observed label (label number) 1 (step 23).

Referring again to Figure 1, a label sequence of a plurality of labels, outputted for each frame from the labeler 8 corresponds to a phoneme, and an aggregate label sequence of some label sequences corresponding to such phonemes corresponds to an input speech word. This label sequence corresponding to a word is fed through a switcher 10 to either the phonemic allophone baseform creator 14, model parameter estimator 15, or recognizer 16.

Again, in this embodiment, speech models are presupposed to output label sequences and therefore input speech is transformed into a label sequence. However, speech models may be presupposed to output feature vector sequences, in which case the feature values obtained by a feature analysis of speech as an object of recognition are fed to the recognizer 16 without undergoing label transformation.

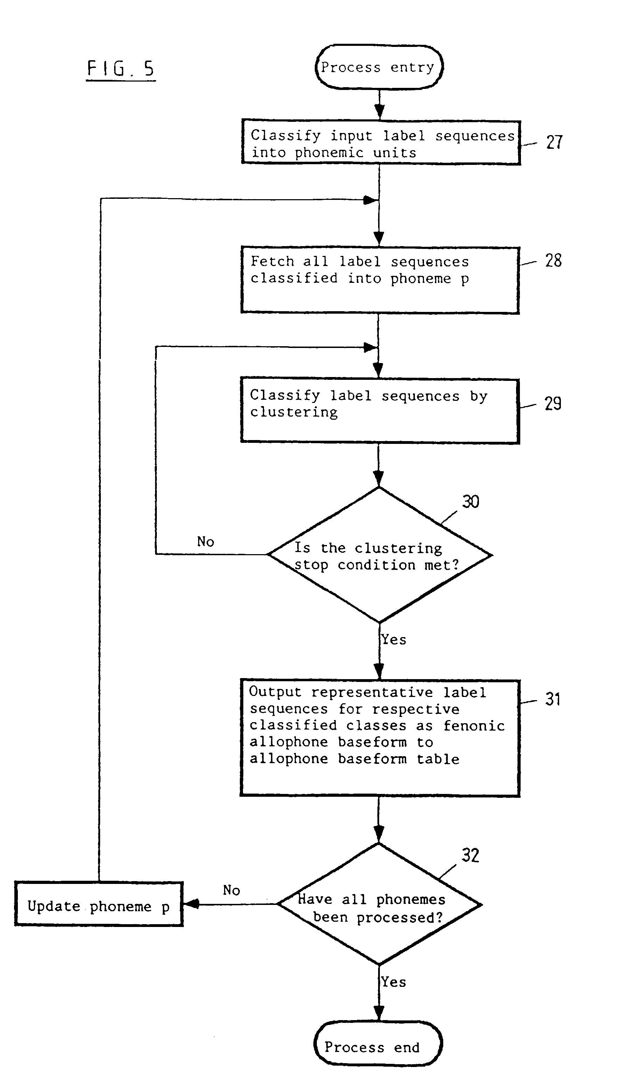

When a phonemic allophone baseform is created, the switcher 10 is switched to the phonemic allophone baseform creator 14; a label sequence is fed to the phonemic allophone baseform creator 14; and an phonemic allophone baseform table 17 is created by reference to the word pronunciation dictionary 11 for allophone baseform creation and the output of the feature extractor 4. The operation of the phonemic allophone baseform creator 14 will be detailed later with reference to Figure 5.

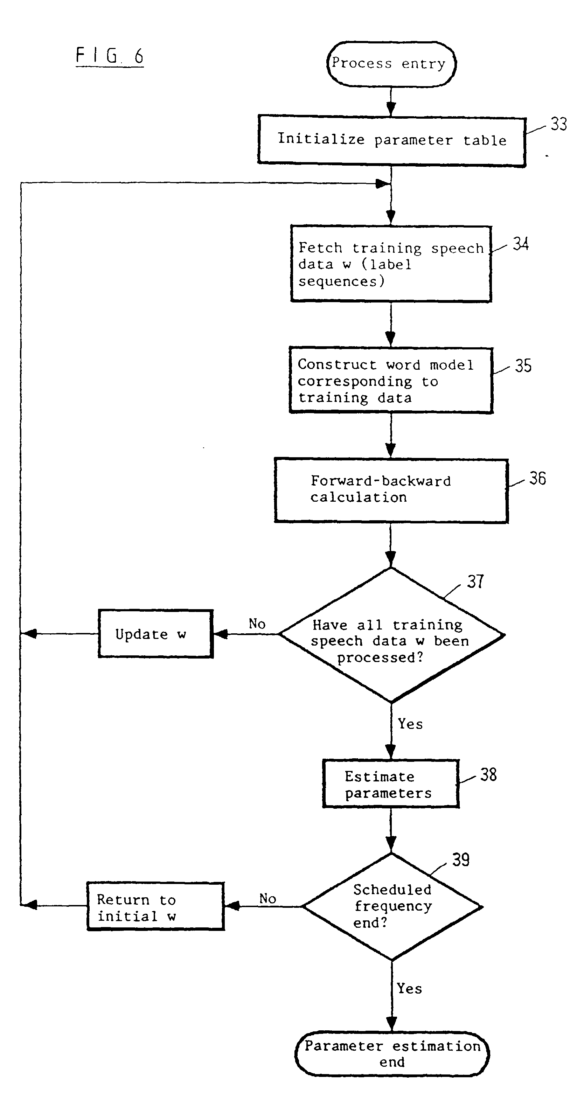

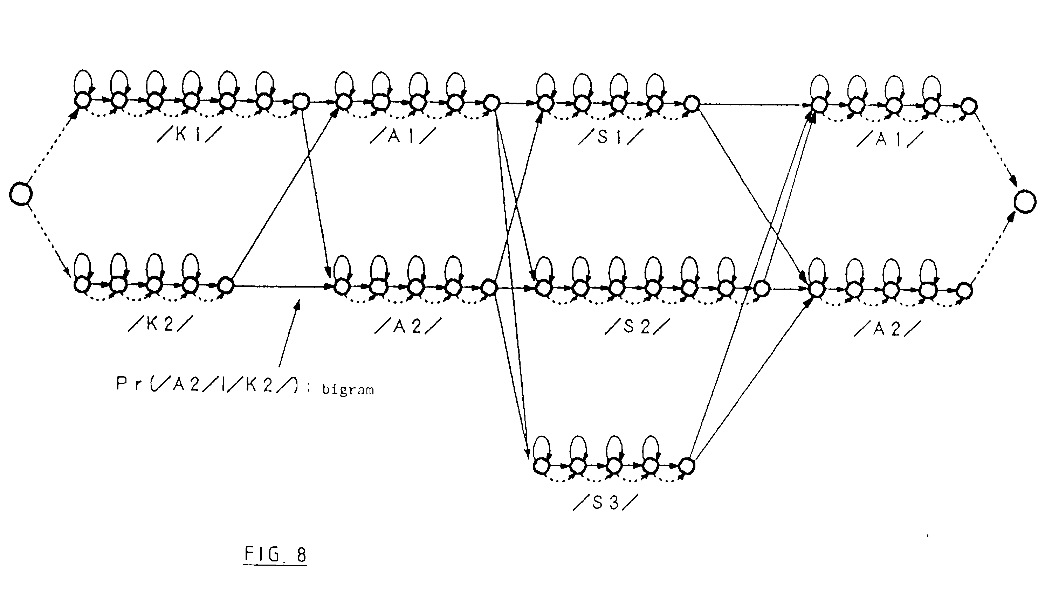

When the parameters of a Markov model are estimated, the switcher 10 is switched to the model parameter estimator 15; the model parameter estimator 15 trains the model by reference to the label sequence, the phonemic allophone baseform table 17 and the training word pronunciation dictionary 12; and determines the parameter values (the parameters of phonemic Markov models and a bigram) in the parameter table 18. The operation of the model parameter estimator will be detailed later with reference to Figure 6 and 8.

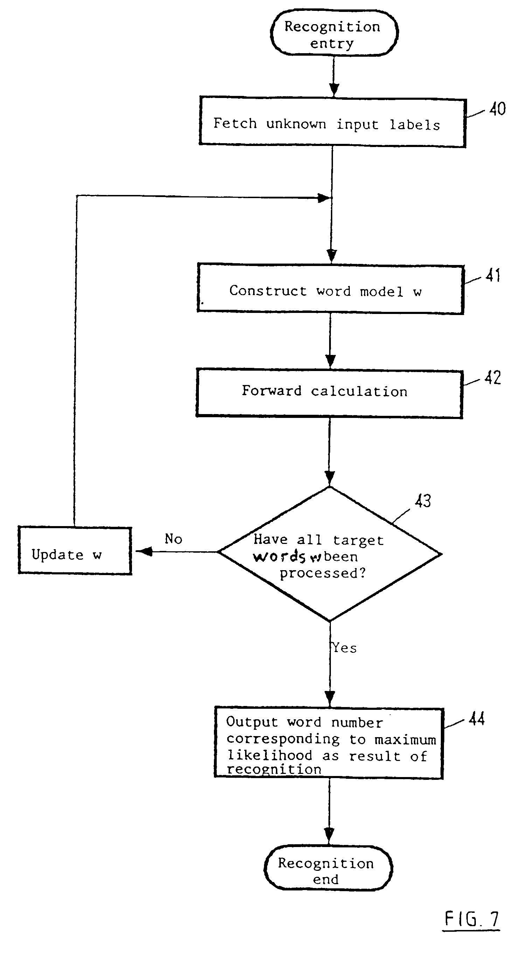

When speech is recognized, the switcher 10 switches to the recognizer 16 and the recognizer recognizes input speech according to an input label sequence, the phonemic allophone baseform table 17, the parameter table 18, and the pronunciation dictionary 13 of words to be recognized. The operation of the recognizer 16 will be detailed later with reference to Figures 7 and 8. The output of the recognizer 16 is fed to a workstation 19, where the words thus recognized are displayed on its display, for example.

In addition, all devices other than the microphone 1, amplifier 2, A/D converter 3, and display 16 shown in Figure 1 are implemented as software on the workstation.

Figure 3 shows the structure of a phonemic HMM used in this embodiment. The nodes drawn as circles in this drawing represent states. The state transition 3 drawn as a chained line is a null transition causing no label output.

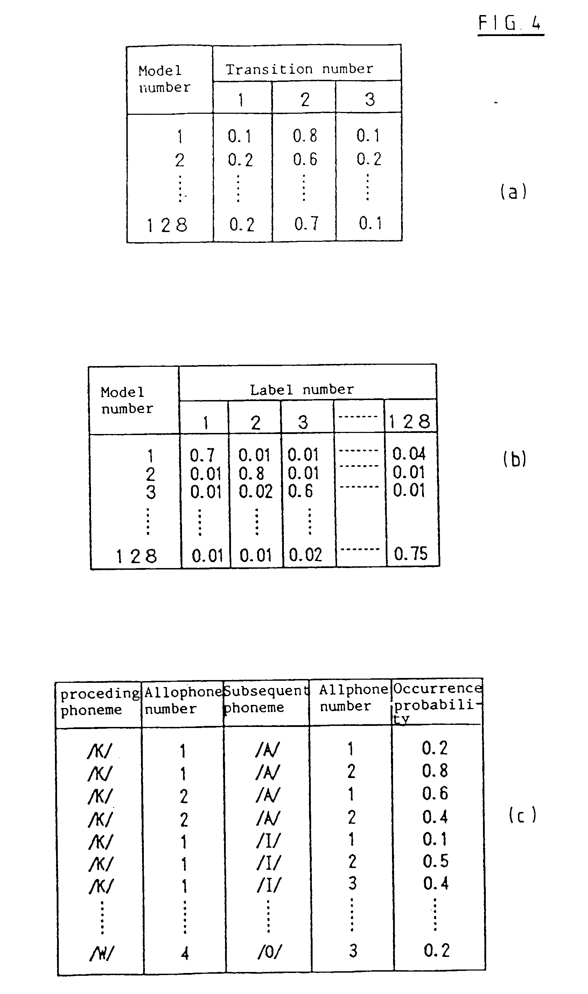

In this embodiment, 128 such phonemic HMMs with corresponding label numbers are provided. The respective phonemic HMMs are assigned such occurrence probabilities as shown in Figure 4(a) corresponding to the respective state transitions 1,2 and 3 shown in Figure 3. Moreover, 128 types of phonemic HMMs are respectively assigned such probabilities of outputting 128 types of labels as shown in Figure 4(b). The parameters of these phonemic HMMs are retained in the parameter table 18.

In this embodiment, phonemic HMMs corresponding to allophones of each phoneme are introduced into the composition of speech models in word units and such phonemic HMMs of phonemes inclusive of allophones are concatenated in parallel in correspondence to list of phonemes along words so as to cope with fluctuations due to phonemic transformations in word pronunciation. A bigram among phonemic HMMs restricting the concatenation of phonemic HMMs of phonemes inclusive of such allophones is also retained to represent the occurrence probabilities of allophones of subsequent phonemes under the conditions of the allophones of preceding phonemes in a word in the parameter table 18.

In this embodiment, only the concatenation of allophones is restricted and the probabilities of phonemic combinations are presupposed to be the same among all phonemes. For instance, in the occurrence probability of the said pair,

$$Pr(A(p(j),m)|A(p(j-1),n))$$

$$= Pr(m|p(j),A(p(j-1),n))Pr(p(j)|A(p(j-1),n))$$

$$\fallingdotseq Pr(m|p(j),A(p(j-1),n))Pr(p(j)|p(j-1))$$

the inter-phonemic bigram "$Pr(p(j)|p(j-1))$" is assumed to be always constant with respect to all phonemes. This invention allows inclusion of such an inter-phonemic bigram, in which case it is necessary to prepare a considerably large amount of learning data for the compilation of each dictionary.

Also, this invention allows composition of a speech model without imposing an N-gram restriction, or by omitting such parameters as shown in Figure 4(c) (parameter table) on the assumption N = 1. In this case as well, it is possible to achieve the intended object of this invention, that is, the materialization of a speech recognizer expressing phonetic transformations and a reduction in storage capacity for models.

With regard to the word "KASA", for instance, there are some speech transformation candidates standing in an allophonetic relation to each other; eg: K1 and K2 to phoneme K; A1 and A2 to phoneme A; S1, S2, and S3 to phoneme S. A speech model for the word "KASA" is composed by concatenating in parallel phonemic HMMs corresponding to these speech transformation candidates according to the occurrence probability of a bigram. The parameter table 18 retains the probability of an allophone occurring continuous to the immediately preceding phoneme (speech transformation candidate) for each phoneme (speech transformation candidate) in the word.

Again, in this embodiment, because the inter-phonemic bigram is assumed to be constant with respect to all phonemes, the probability of /A/ following /K/ as well is presupposed to be the same as that of /I/ following /K/.

The speech recognizer in said arrangement performs three major operations: creation of phonemic allophone baseforms; estimation of model parameters; and speech recognition. The first two operations are preparatory ones for speech recognition. These operations are inputted as described in the word pronunciation dictionary 13.

Phonemic allophone baseforms are created by the above-mentioned phonemic allophone baseform creator 14 in the procedure shown in Figure 5.

First, word speech inputted through the microphones 1 is transformed into an input label sequence by the labeler 8 for phonemic allophone baseform creation. This input label sequence is then fed from the switcher 10 to the phonemic allophone baseform creator 14. This input label sequence is partitioned into phonemic units by reference to the word pronunciation dictionary 11 for phonemic allophone baseform creation in which the phonemic sequence of the input word pronunciation is transcribed (step 27). On this occasion, the variation volumes of the feature volumes outputted from the feature extractor 4 are used for the determination of phonemic boundaries. This operation is performed on all word speech for phonemic allophone baseform creation. All input label sequences are thus partitioned and classified according to phonemes.

The label sequences for the segments classified into phonemes (p) are all incorporated (step 28). Clustering is carried out for each phoneme by use of this data, and labels representative of the respective classes are selected (step 29 and step 30). As a result, the label sequences of all allophone candidates (speech transformation candidates) are obtained.

The distance between labels for use during clustering is defined by use of the likelihood of a model, considering one as a phonemic Markov phoneme baseform and the other as an input label sequence. On this occasion, the parameters of the phonemic Markov models are used only as parameter volumes already trained in word pronunciation or as initial values.

The representative label sequences of speech transformation candidates obtained for each phoneme are recorded as phonemic allophone baseforms in the phonemic allophone baseform table 17 (step 31). The above-described series of processing is performed on all phonemes included in the inputted word speech (step 32) and then the creation of the phonemic allophone baseform table 17 is terminated.

Thus, the label sequences of the speech transformation candidates (allophones) for each phoneme are stored in the phonemic allophone baseform table 17 created above.

Furthermore, when speech recognition is carried out by use of phonemic HMMs as in this embodiment, although recognition is carried out based on either the label sequence or the feature vector sequence, because phonemic HMMs are models in label units. It is necessary to use phonemic allophone base forms as label sequences. On the other hand, because unlike phonemic HMMs, other types of HMM do not compose model sequences on the basis of label sequences, the allophone baseform table 17 retains HMMs for each speech transformation candidates (allophone).

Model parameter estimation is carried out to modify (train) the parameters of phonemic HMMs themselves as shown in Figure 4(a) and 4(b) and the parameters of an inter-phonemic bigram as shown in Figure 4(c) so as to facilitate output of words to be recognized, and is carried out by the above-mentioned model parameter estimator 15 in the procedure shown in Figure 6.

First, the parameter table 18 is initialized (step 33). On this occasion, already trained parameters may be used as initial values.

Next, the label sequence of training word speech ("KASA" for example) is fetched through the switcher 10 (step 34). A word speech model, as shown in Figure 8, corresponding to this training word speech is composed by reference to the training word pronunciation dictionary 12, phonemic allophone baseform table 17, and parameter table 18 (step 35), and then the parameters of each phonemic HMM and an inter-phonemic bigram are determined by performing forward-backward calculations (step 36).

After these calculations are performed on all training word speech data (step 37), the parameters of all phonemic HMMs and the bigram are estimated by maximum likelihood estimation by use of the results of these calculations (step 38), and the parameter table 18 is updated with the resulting parameters.

Then the above-described series of processes (steps 34 to 38) is repeated as many times as prescribed, e.g., five times by reference to the newly estimated parameter table 18, and then model parameter estimation is terminated (step 39).

Input speech recognition is carried out by the recognizer 16 in the procedure shown in figure 7.

First, the input label sequence of word speech to be recognized is read through the switcher 10 (step 40). Next a word speech model as shown in Figure 8 is composed by reference to the word pronunciation dictionary 13 containing a plurality of candidate words to be recognized, the phonemic allophone baseform table 17, and the parameter table 18 (step 41). The likelihood of the word speech model to output said input label sequence is determined by performing forward calculations (step 42).

Again a Viterbi algorithm may be used to determine the likelihood.

Said processing series is performed on all the candidate words in the word pronunciation dictionary 13 (step 43). A candidate word corresponding to the model providing the greatest likelihood among the word speech models in said process output as the result of the recognition to the display 19 (step 44) and is displayed on the display screen.

Although in the above described embodiment, an example of a speech model composed under the restriction of a bigram of phonemic HMMs has been explained with respect to word units as objects of recognition with consideration for allophones of phonemic units, this invention is not limited in scope to this example but can assume various embodiments.

Objects of recognition are not limited to words but may also be phrases or sentences. An object of recognition may be set as a unit of processing at will according to purposes.

Also, units of speech transformation candidates (allophones) transformed as speech may be syllables and CVC. Other components composing words to be recognized, may be optionally set in accordance with various conditions.

Also, HMMs are not limited to ones of the phonemic type but may also be ones of the phonetic type. Again, HMMs may be joined together under the restriction of either a bigram or various N-grams (N = an integer greater than or equal to 3).

Advantages of the invention

As has been described so far, this invention enables the efficient materialization of a speech recognizer expressing various phonetic transformations, e.g., allophones, caused by pronunciation by combining HMMs under the restriction of an N-gram.

Also, this invention enables variations in each speaker's pronunciation to be suppressed under an N-gram of allophones restriction so, unlike the method of joining HMMs in series, this invention makes it possible to avoid each HMM involving every speaker's pronunciational variations even for the recognition of an unspecific speaker's speech.

Moreover, speech models of this invention allow themselves to be retained in component HMMs and hence these HMMs can also be used for composition of various speech models. Again, speech models according to this invention enable a sharp reduction of storage space for models as against the mode such that speech models are prepared in word units.

Furthermore, this invention enables the parameters of an N-gram to be trained efficiently. When phonemic HMMs are used, those parameters have many opportunities to receive training by various sorts of training speech. Hence, optimum parameters are set even if training is not frequent.

## Claims

1. A speech recognizer comprising:

   means (4) for analyzing a word inputted as speech for its features and thus obtaining a label sequence or feature vector sequence corresponding to said word;

   means (18) for storing a hidden Markov model of each pronunciational variation of all the subword units used by the speech recognizer into which a word inputted as speech may be decomposed;

   dictionary means (13) for storing a plurality of candidate words into which a word inputted as speech may be recognized;

   means (15) for composing a speech model of each of said candidate words by concatenating in parallel the hidden Markov model of each pronunciational variation of the subword units comprised in a candidate word, whereby the hidden Markov models of all the pronunciational variations of a subword unit are positioned in parallel in each so composed speech model; and

   means (42) for determining the probability of a speech model composed with regard to each candidate word outputting the label sequence or feature vector sequence of said word inputted as speech, and for outputting the candidate word corresponding to the speech model of highest probability as a result of recognition.

2. A speech recognizer according to claim 1 wherein:

   said hidden Markov models are phonemic hidden Markov models.

3. A speech recognizer according to claim 1 or claim 2 wherein:

   said subword units of a word are given an N-gram relation, wherein N is an integer greater than or equal to 2, with the pronunciational variations of other preceding subword in the word; and

   said hidden Markov models being concatenated in parallel among said subwords in dependence on said N-gram relation.

4. A method of speech recognition comprising steps of:

   analyzing a word inputted as speech for its features and thus obtaining (40) a label sequence or feature vector sequence corresponding to said word;

   storing a hidden Markov model of each pronunciational variation of all the subword units used by the speech recognizer into which a word inputted as speech may be decomposed;

   storing a plurality of candidate words into which a word inputted as speech may be recognized;

   composing (41) a speech model of each of said candidate words by concatenating in parallel the hidden Markov model of each pronunciational variation of the subword units comprised in a candidate word, whereby the hidden Markov models of all the pronunciational variations of a subword unit are positioned in parallel in each so composed speech model; and

   determining (42) the probability of a speech model composed with regard to each candidate word outputting the label sequence or feature vector sequence of said word inputted as speech, and outputting (44) the candidate word corresponding to the speech model of highest probability as a result of recognition.

5. A method according to claim 4 wherein:

   said hidden Markov models are phonemic hidden Markov models.

6. A method according to claim 4 or claim 5 wherein:

   said subword units of a word are given an N-gram relation, wherein N is an integer greater than or equal to 2, with the pronunciational variations of other preceding subwords in the word; and

   said hidden Markov models being concatenated in parallel among said subwords in dependence on said N-gram relation.

### Patentansprüche

1. Eine Vorrichtung zur Spracherkennung, folgendes umfassend:

   Mittel (4) zur Analyse eines als Sprache eingegebenen Wortes im Hinblick auf seine Merkmale und somit Erhalten einer Kennsatzsequenz oder Merkmalsvektorsequenz, die dem genannten Wort entspricht;

Mittel (18) zum Speichern eines versteckten Markov-Modells jedes Ausspracheunterschieds aller Subworteinheiten, die von der Spracherkennnungseinheit verwendet werden, in die ein als Sprache eingegebenes Wort zerlegt werden kann;

Bevorratungsmittel (13) zum Speichern einer Vielzahl von Kandidatenworten, als die ein als Sprache eingegebenes Wort erkannt werden kann;

Mittel (15) zur Aufstellung eines Sprachmodells für jedes der genannten Kandidatenworte durch parallele Verkettung des versteckten Markov-Modells jedes Ausspracheunterschieds der in einem Kandidatenwort enthaltenen Subworteinheiten, wodurch die versteckten Markov-Modelle aller Ausspracheunterschiede einer Subworteinheit in einem jeden so zusammengestellten Sprachmodell parallel angeordnet werden; und

Mittel (42) zur Bestimmung der Wahrscheinlichkeit eines Sprachmodells, das für jedes Kandidatenwort zusammengestellt wurde, und das die Kennsatzsequenz oder die Merkmalsvektorsequenz des genannten, als Sprache eingegebenen Wortes ausgibt, und für die Ausgabe des Kandidatenwortes entsprechend dem Sprachmodell der höchsten Wahrscheinlichkeit als ein Ergebnis der Erkennung.

2.   Eine Vorrichtung zur Spracherkennung nach Anspruch 1, bei der:

die genannten versteckten Markov-Modelle phonemische versteckte Markov-Modelle sind.

3.   Eine Vorrichtung zur Spracherkennung nach Anspruch 1 oder Anspruch 2, bei der:

die genannten Subworteinheiten eines Wortes eine N-Gramm-Beziehung erhalten, wobei N eine Ganzzahl ist, die größer als oder gleich 2 ist, mit den Ausspracheunterschieden anderer vorangehender Subworte in dem Wort; und

die genannten versteckten Markov-Modelle in Abhängigkeit von der genannten N-Gramm-Beziehung unter den Subworten parallel verkettet sind.

4.   Eine Methode zur Spracherkennung, folgende Schritte umfassend:

Analysieren eines als Sprache eingegebenen Wortes im Hinblick auf seine Merkmale und dadurch Erhalten (40) einer Kennsatzsequenz oder einer Merkmalsvektorsequenz, die dem genannten Wort entspricht;

Speichern eines versteckten Markov-Modells jedes Ausspracheunterschiedes aller Subworteinheiten, die von der Spracherkennungseinheit verwendet werden, und in die ein als Sprache eingegebenes Wort zerlegt werden kann;

Speichern einer Vielzahl von Kandidatenworten, als die ein als Sprache eingegebenes Wort erkannt werden kann;

Zerlegen (41) eines Sprachmodells eines jeden der genannten Kandidatenworte durch Parallelverkettung des versteckten Markov-Modells jedes Ausspracheunterschiedes der Subworteinheiten, die in einem Kandidatenwort enthalten sind, wodurch die versteckten Markov-Modelle aller Ausspracheunterschiede einer Subworteinheit in jedem so zusammengestellten Sprachmodell parallel angeordnet werden; und

Bestimmen (42) der Wahrscheinlichkeit eines Sprachmodells, das für jedes Kandidatenwort zusammengestellt wurde, das die Kennsatzsequenz oder die Merkmalsvektorsequenz des genannten, als Sprache eingegebenen Wortes ausgibt, und Ausgabe (44) des Kandidatenwortes, das dem Sprachmodell mit der höchsten Wahrscheinlichkeit entspricht, als Ergebnis der Erkennung.

5.   Eine Methode nach Anspruch 4, bei der:

die genannten versteckten Markov-Modelle phonemische versteckte Markov-Modelle sind.

6.   Eine Methode nach Anspruch 4 oder Anspruch 5, bei der:

den genannten Subworteinheiten eines Wortes eine N-Gramm-Relation mit den Ausspracheunterschieden anderer vorangehender Subworte in dem Wort gegeben wird, wobei N eine Ganzzahl ist, die größer als oder gleich 2 ist; und

die genannten versteckten Markov-Modelle parallel unter den genannten Subworten verkettet werden, in Abhängigkeit von der genannten N-Gramm-Relation.

**Revendications**

1.   Dispositif de reconnaissance de la parole comprenant :

un moyen (4) destiné à analyser un mot entré sous forme de parole pour rechercher ses caractéristiques et obtenir ainsi une séquence d'étiquettes ou une séquence de vecteurs de caractéristiques correspondant audit mot,

un moyen (18) destiné à mémoriser un modèle de Markov caché de chaque variante de prononciation de toutes les unités de sous-mots utilisées par le dispositif de reconnaissance de la parole, dans lequel un mot entré sous forme de parole peut être décomposé,

un moyen de dictionnaire (13) destiné à mémoriser une pluralité de mots candidats dans lequel un mot entré sous forme de parole peut être reconnu,

un moyen (15) destiné à composer un modèle vocal de chaque dit mot candidat en concaténant en parallèle le modèle de Markov caché de chaque variante de prononciation des unités de sous-mots comprises dans un mot candidat, d'où il résulte que les modèles de Markov cachés de toutes les variantes de prononciation d'une unité de sous-mots sont positionnés en parallèle dans chaque modèle vocal ainsi composé, et

un moyen (42) destiné à déterminer la probabilité d'un modèle vocal composé en fonction de chaque mot candidat en fournissant en sortie la séquence d'étiquettes ou la séquence de vecteurs de caractéristiques dudit mot entré sous forme de parole, et destiné à fournir en sortie le mot candidat correspondant au modèle vocal présentant la probabilité la plus élevée en tant que résultat de la reconnaissance.

2. Dispositif de reconnaissance de la parole selon la revendication 1, dans lequel :

lesdits modèles de Markov cachés sont des modèles de Markov cachés à phonèmes.

3. Dispositif de reconnaissance de la parole selon la revendication 1 ou la revendication 2, dans lequel :

lesdites unités de sous-mots d'un mot reçoivent une relation de N-gramme, dans laquelle N est un nombre entier supérieur ou égal à 2, avec les variantes de prononciation des autres sous-mots précédents dans le mot, et

lesdits modèles de Markov cachés étant concaténés en parallèle parmi lesdits sous-mots suivant ladite relation de N-gramme.

4. Procédé de reconnaissance de la parole comprenant les étapes consistant à :

analyser un mot reçu en entrée sous forme de parole pour rechercher ses caractéristiques et obtenir ainsi (40) une séquence d'étiquettes ou une séquence de vecteurs de caractéristiques correspondants audit mot,

mémoriser un modèle de Markov caché de chaque variante de prononciation de toutes les unités de sous-mots utilisées par le dispositif de reconnaissance de la parole dans lequel un mot reçu en entrée sous forme de parole peut être décomposé,

mémoriser une pluralité de mots candidats dans lequel un mot reçu en entrée sous forme de parole peut être reconnu,

composer (41) un modèle vocal de chacun desdits mots candidats en concaténant en parallèle le modèle de Markov caché de chaque variante de prononciation des unités de sous-mots comprises dans un mot candidat, d'où il résulte que les modèles de Markov cachés de toutes les variantes de prononciation d'une unité de sous-mots sont positionnés en parallèle dans chaque modèle vocal ainsi composé, et

déterminer (42) la probabilité d'un modèle vocal composé en fonction de chaque mot candidat en fournissant en sortie la séquence d'étiquettes ou la séquence de vecteurs de caractéristiques dudit mot reçu en entrée sous forme de parole, et fournissant en sortie (44) le mot candidat correspondant au modèle vocal présentant la probabilité la plus élevée en tant que résultat de la reconnaissance.

5. Procédé selon la revendication 4, dans lequel :

lesdits modèles de Markov cachés sont des modèles de Markov cachés à phonèmes.

6. Procédé selon la revendication 4 ou la revendication 5, dans lequel :

lesdites unités de sous-mots d'un mot reçoivent une relation de N-gramme dans laquelle N est un nombre entier supérieur ou égal à 2, avec les variantes de prononciation des autres sous-mots précédents dans le mot, et

lesdits modèles de Markov cachés étant concaténés en parallèle parmi lesdits sous-mots

**EP 0 590 925 B1**

suivant ladite relation de N-gramme.

FIG. 1

FIG. 2

FIG. 3

FIG. 4

| Model number | Transition number | | |
|---|---|---|---|
| | 1 | 2 | 3 |
| 1 | 0.1 | 0.8 | 0.1 |
| 2 | 0.2 | 0.6 | 0.2 |
| ⋮ | ⋮ | ⋮ | ⋮ |
| 128 | 0.2 | 0.7 | 0.1 |

(a)

| Model number | Label number | | | | |
|---|---|---|---|---|---|
| | 1 | 2 | 3 | ------- | 128 |
| 1 | 0.7 | 0.01 | 0.01 | ------- | 0.04 |
| 2 | 0.01 | 0.8 | 0.01 | ------- | 0.01 |
| 3 | 0.01 | 0.02 | 0.6 | ------- | 0.01 |
| ⋮ | ⋮ | ⋮ | ⋮ | | |
| 128 | 0.01 | 0.01 | 0.02 | ------- | 0.75 |

(b)

| proceding phoneme | Allophone number | Subsequent phoneme | Allphone number | Occurrence probability |
|---|---|---|---|---|
| /K/ | 1 | /A/ | 1 | 0.2 |
| /K/ | 1 | /A/ | 2 | 0.8 |
| /K/ | 2 | /A/ | 1 | 0.6 |
| /K/ | 2 | /A/ | 2 | 0.4 |
| /K/ | 1 | /I/ | 1 | 0.1 |
| /K/ | 1 | /I/ | 2 | 0.5 |
| /K/ | 1 | /I/ | 3 | 0.4 |
| ⋮ | ⋮ | ⋮ | ⋮ | ⋮ |
| /W/ | 4 | /O/ | 3 | 0.2 |

(c)

FIG. 5

```
                    ┌─────────────────┐
                    │  Process entry  │
                    └────────┬────────┘
                             │
                             ▼
              ┌──────────────────────────────┐
              │ Classify input label sequences│──── 27
              │ into phonemic units           │
              └──────────────┬───────────────┘
                             │
                             ▼
              ┌──────────────────────────────┐
              │ Fetch all label sequences     │──── 28
              │ classified into phoneme p     │
              └──────────────┬───────────────┘
                             │
                             ▼
              ┌──────────────────────────────┐
              │ Classify label sequences by   │──── 29
              │ clustering                    │
              └──────────────┬───────────────┘
                             │
                             ▼
                          ╱╲  30
                   No    ╱    ╲
              ◄────────╱Is the  ╲
                      ╲clustering╱
                      ╲stop      ╱
                       ╲condition╱
                        ╲met?   ╱
                         ╲╱
                          │ Yes
                          ▼
              ┌──────────────────────────────┐
              │ Output representative label   │──── 31
              │ sequences for respective      │
              │ classified classes as fenonic │
              │ allophone baseform to         │
              │ allophone baseform table      │
              └──────────────┬───────────────┘
                             │
                             ▼
                          ╱╲  32
         ┌─────────────┐ No ╱  ╲
         │Update       │◄──╱Have all ╲
         │phoneme p    │   ╲phonemes  ╱
         └─────────────┘   ╲been      ╱
                            ╲processed?╱
                             ╲╱
                              │ Yes
                              ▼
                    ┌─────────────────┐
                    │   Process end   │
                    └─────────────────┘
```

F I G. 6

Process entry

Initialize parameter table —33

Fetch training speech data w (label sequences) —34

Construct word model corresponding to training data —35

Forward-backward calculation —36

Have all training speech data w been processed? —37

No → Update w

Yes

Estimate parameters —38

Scheduled frequency end? —39

No → Return to initial w

Yes

Parameter estimation end

FIG. 7

F I G. 8